**Europäisches Patentamt**

**European Patent Office**

**Office européen des brevets**

(19)

(11) **EP 1 502 492 A2**

(12) **EUROPÄISCHE PATENTANMELDUNG**

(43) Veröffentlichungstag:
**02.02.2005 Patentblatt 2005/05**

(51) Int Cl.⁷: **A01D 45/02**

(21) Anmeldenummer: **04016623.3**

(22) Anmeldetag: **15.07.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL HR LT LV MK**

(30) Priorität: **24.07.2003 DE 10333845**
**11.06.2004 DE 102004028246**

(71) Anmelder: **CLAAS Saulgau GmbH**
**88348 Bad Saulgau (DE)**

(72) Erfinder:
- **Albinger, Bernd**
**88454 Hochdorf (DE)**

- **Biesenberger, Ulrich**
**88348 Bad Saulgau (DE)**
- **Boll, Ulrich**
**88348 Bad Saulgau (DE)**
- **Fischer, Bernhard**
**88379 Unterwaldhausen (DE)**
- **Huchler, Ferdinand**
**89081 Ulm (DE)**
- **Roth, Georg**
**88348 Bad Saulgau (DE)**
- **Schelkle, Roland**
**88348 Bad Saulgau (DE)**
- **Zechmann, Robert**
**94121 Kindleinsberg (DE)**

(54) **Gerät zum Ernten von Mais**

(57)　　　Gerät und Verfahren zum Ernten von Mais oder dergleichen Körnerfrüchten, insbesondere Pflückvorsatzgerät für Mähdrescher (2) oder Feldhäcksler (2), mit wenigstens zwei Pflückwalzen zur Trennung des Fruchtstandes von dem diesen tragenden Pflanzenteil, die um etwa in Fahrtrichtung (F) des Pflückvorsatzgerätes weisende Drehachsen (30,30') angetrieben umlaufen, und die miteinander oder mit dem Walzengrundkörper der jeweils benachbarten Pflückwalze einen Durchgangsspalt (10) einer Pflückereinheit begründen, wobei wenigstens eine der Pflückwalzen (9 oder 9') einer Pflückereinheit (8) um ihre Drehachse (30 oder 30') Gewindegänge (15 oder 15') im Sinne einer Gewindespindel aufweist. Des weiteren wird eine exzentrische Lagerung der Pflückwalzen vorgeschlagen, so dass der Durchgangsspalt (10) eine periodisch wiederkehrende Lageveränderung mit der Drehfrequenz (f) der angetriebenen Pflückwalzen erfährt.

Fig.3

EP 1 502 492 A2

**Beschreibung**

Die Erfindung bezieht sich auf ein Gerät zum Ernten von Mais oder dergleichen Körnerfrüchten, insbesondere auf ein Vorsatzgerät für Mähdrescher oder Feldhäcksler in einer Ausbildung gemäß Oberbegriff des Anspruchs 1.

Derartige Pflückvorsatzgeräte für Mähdrescher sind auch unter dem Begriff Maispflücker bekannt. Unabhängig davon, ob derartige Maispflücker reihenabhängig oder reihenunabhängig arbeiten, weisen diese mehrere quer zur Fahrtrichtung nebeneinander angeordnete Pflückaggregate auf, die in einem diesen gemeinsamen Rahmen befestigt und gelagert sind.

Die Pflückaggregate arbeiten nach dem Prinzip des Abstreifens, d.h. die Stängel der Maispflanzen samt Blattwerk werden im Bereich der Pflückaggregate durch einen Pflückspalt hindurchgezogen, so dass dabei die Maiskolben von den Stängeln abgerissen und zurückgehalten werden. Es handelt sich hierbei also gleichzeitig um einen Separationsvorgang, bei dem die Maiskolben, nachdem sie von der restlichen Maispflanze abgetrennt wurden, dem Dresch- oder Häckselaggregat zugeführt werden.

Der eigentliche Abstreifvorgang wird dabei von rotierenden Antriebselementen unterstützt, welche die Maisstängel erfassen und auf diese nach unten gerichtete Zugkräfte ausüben.

Da die restliche Pflanze im Regelfall nicht mitgeerntet wird, wird diese nach dem Separationsvorgang des Abtrennens der Maiskolben zerkleinert. Dieses kann beispielsweise von sogenannten Horizontalhäckslern, die unterhalb der Pflückaggregate angeordnet sind, durchgeführt werden.

Allen Pflück- und Häckselaggregaten gemeinsam ist, dass sie rotierende Arbeitswerkzeuge aufweisen, die mit der Antriebswelle des Motors des Mähdreschers in Wirkverbindung stehen.

Bei einem bekannten Gerät dieser Art (DE-B-17 57 213; US-A-2 870 593) haben die Pflückwalzen parallel zueinander ausgerichtete Drehachsen. Die Konizität der Arbeitsflächen der Pflückwalzen schafft dementsprechend einen Durchgangsspalt, der sich zum rückwärtigen Basisende der Pflückwalzen hin in der Breite verringert.

Bei einem anderen bekannten Gerät (DE-A-20 00 140, FR-A-1 268 615) haben die Pflückwalzen zylindrische Arbeitsflächen. Die Drehachsen der Pflückwalzen divergieren zum Frontende der Pflückwalzen hin, so dass hierdurch ebenfalls ein Durchgangsspalt gebildet wird, der sich zu seinem rückwärtigen Ende hin in der Breite verringert.

Bei einem weiterhin bekannten Gerät (DE-C-39 18 362) haben die Pflückwalzen zylindrische Arbeitsflächen und untereinander parallel ausgerichtete Drehachsen und dementsprechend einen über seine Länge gleichbleibend breiten Durchtrittspalt. Zur Zerkleinerung der geernteten Halme kann dabei unterhalb der Pflückwalzen eine Schneidvorrichtung mit beispielsweise einem rotierenden Schneidmesser vorgesehen sein.

In der EP 1 005 264 ist ein gattungsgemäßes Gerät zum Ernten von Mais oder dergleichen Körnerfrüchten beschrieben. Dieses weist mehrere nebeneinander liegende Pflückeinheiten auf, die von einem Maschinenrahmen aufgenommen werden. Eine Pflückeinheit wiederum besteht aus einem Paar gegenläufig zueinander umlaufend angetriebenen Pflückwalzen, oberhalb derer sich von Längsträgern abgestützte Pflückplatten befinden. Die Pflückwalzen dienen als rotierende Antriebswerkzeuge zum Durchzug der Maispflanzen durch den Pflückspalt, der den Abstand der Pflückplatten zueinander bestimmt, wobei die Drehachsen der Pflückwalzen einer Pflückeinheit konvergieren, und wobei zur Unterstützung der Förderung der abgetrennten Maiskolben in Richtung der Querförderschnecke jede Pflückeinheit oberhalb der Pflückplatten mit gegenläufig einwärts angetriebenen umlaufenden, mit Mitnehmern besetzten Einzugsketten ausgestattet ist.

Unterhalb der Pflückwalzen kann dabei in bekannter Weise ein Häckselwerk vorgesehen sein, welches die Stängel der Maispflanzen beim Durchzug durch die Pflückwalzen häckselt.

Aufgabe der Erfindung ist es nun, ein Gerät zum Pflücken von Mais oder ähnlichen Erntefrüchten mit verbesserten Pflückeigenschaften zu schaffen, welches mit wesentlich einfacheren und kostengünstigeren Pflückeinheiten ausgestattet ist, wodurch die Wirtschaftlichkeit eines derartigen Gerätes verbessert wird.

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Eine erfindungsgemäße Pflückeinheit für ein Gerät zum Pflücken von Mais nach der Erfindung besteht aus zwei umlaufend angetriebenen Pflückwalzen, die gegenläufig zueinander drehend in einem Stützrahmen gelagert sind, und die als Gewindespindeln ausgebildet sind. Die Gewindesteigungen bei den Pflückwalzen einer Pflückeinheit sind dem Betrage nach untereinander gleich aber gegenläufig und somit spiegelbildlich zueinander ausgebildet.

Dabei stehen sich die Gewindeprofile beider Pflückwalzen einer Pflückeinheit durch die vordefinierten und festgelegten Drehwinkellagen beider Pflückwalzen derart gegenüber, dass innerhalb der Ebene des Achsschnitts der einander zugewandten Gewindeprofile einem Gewindezahn der einen Pflückwalze eine Gewindelücke der benachbarten Pflückwalze gegenüberliegt.

Der Grundkörper derartiger Pflückwalzen kann beispielsweise zylindrisch, aber auch konisch oder ballig ausgebildet sein. Die Drehachsen der Pflückwalzen können parallel aber auch divergierend zueinander verlaufen.

In einer weiteren vorteilhaften Ausgestaltung der Erfindung können die Gewindezähne der einen Pflückwalze in die gegenüberliegende Gewinderille der anderen Pflückwalze zumindest teilweise eingreifend miteinander verzahnen, ohne dass sich dabei die Gewindeflanken deshalb notwendiger Weise berühren.

In einer weiteren Ausgestaltung der Erfindung ist die Steigung der als Gewindespindel ausgebildeten Pflückwalzen relativ gering in Bezug auf den Außendurchmesser einer Pflückwalze. Auch kann die Gewindespindel ein- oder mehrgängig ausgeführt sein.

Abstand und Durchmesser der Pflückwalzen einer Pflückeinheit sind dabei so bemessen, dass sich eine Reihe von Gewindezähnen und Gewindelücken im Achsschnitt in periodischer Reihenfolge im wesentlichen längs der Drehachsen wiederholen. Dabei bilden sich durch das Zusammenwirken beider Pflückwalzen im Bereich der Gewindezähne und deren gegenüberliegenden Gewindelücken mit den sich diesen in axialer Richtung anschließenden Gewindeflanken des Gewindeprofils Spaltflächen, die zugleich als Durchgangsund Pflückspalte dienen können.

Durch die gegenläufige Umlaufbewegung beider Pflückwalzen entsteht bei einer vollen Umdrehung längs der Achse der Pflückwalzen eine relative Axialverschiebung der als Spaltflächen ausgebildeten Durchzugsspalte um den Versatz des Betrages der Steigung des Gewindeprofils, so dass bei fortlaufender Drehbewegung und konstanter Drehzahl der Pflückwalzen die Axialverschiebung der zuvor definierten Spaltflächen als Durchzugsspalte jetzt ebenfalls mit konstanter axialer Verschiebegeschwindigkeit erfolgt.

Bedingt durch das Einzugs- und Fangverhalten der Pflückwalzen des Vorsatzgerätes einerseits und durch die Vorwärtsbewegung des Trägerfahrzeugs - Mähdrescher oder Feldhäcksler - als Zustellbewegung gegenüber den stehenden Pflanzenstängeln andererseits, gelangen die Pflanzenstängel mit ihren Fruchtständen in den jeweiligen Einzugsbereich einer Pflückeinheit und damit in den Durchzugsspalt zwischen den Pflückwalzen.

Dabei ist die Drehbewegung der Pflückwalzen in bekannter Weise so gewählt, dass die Umlaufbewegung der Pflückwalzen die Stängel in Richtung Boden durch den Durchzugsspalt hindurch zieht. Der Abstand der Pflückwalzen und die Abmessungen des Gewindeprofils können nach der Erfindung besonders vorteilhaft so bemessen sein, dass die hintereinander folgenden Spaltabmessungen quer und längs der Fahrtrichtung so bemessen sind, dass die Maisstängel einer dreidimensionalen Verquetschung ausgesetzt sind, so dass die Stängel nicht nur durch die Umlaufbewegung nach unten gezogen sondern gleichzeitig auch in axialer Richtung relativ entgegen der Fahrtrichtung bewegt werden um somit Platz und Raum für den nachfolgend zu erfassenden Stängel einer Pflanze zu schaffen.

Das verbleibende Kopfspiel zwischen Zahnlücke und Gewindezahn definiert dabei die Breite, und die durchschnittliche Breite einer Zahnlücke der als Gewindespindel ausgebildeten Pflückwalze die Länge der einzelnen hintereinander liegenden Durchgangsspalte einer Pflückeinheit. Dabei können die Durchzugskräfte einer derartigen Pflückeinheit noch durch das Einbringen von Arbeitskanten in Form von Mitnahmeelementen in den Zahnlücken erhöht werden, die dann auf Lücke auf den Umfängen der Pflückwalzen so verteilt sind, dass diese sich nicht gegenseitig durch die Umlaufbewegungen der Pflückwalzen berühren können.

Bedingt durch die dreidimensionale Verquetschung der Maisstängel entstehen zuverlässige und hohe Durchzugskräfte, und durch die Axialverschiebung der periodisch angreifenden Durchzugsspalte als Fangspalte, kann die Durchzugsgeschwindigkeit der Stängel und damit der Durchsatz einer Pflückeinheit erheblich und zuverlässig gesteigert werden.

In einer weiteren und besonders vorteilhaften Ausgestaltung der Erfindung können die Durchzugsspalte gleichermaßen als Pflückspalte genutzt werden.

Dabei übernehmen die Pflückwalzen einer Pflückeinheit gleichermaßen die Funktion eines Pflückspaltes von Pflückplatten.

Die Durchmesser der Pflückwalzen sind dabei so bemessen, dass die abgetrennten Fruchtstände, wie beispielsweise Maiskolben, aufgrund der engen Breite der Durchzugsspalte nicht in den Durchzugsspalt gelangen können.

Dabei erfahren die abgetrennten auf den umlaufend rotierenden Pflückwalzen liegenden Fruchtstände bedingt durch die axiale Mitnahmewirkung der als Gewindespindeln ausgebildeten Pflückwalzen einen zügigen Abtransport in Richtung der Querförderschnecke, welches eine zusätzliche Fördereinrichtung zum Abtransport der Fruchtstände oberhalb der Pflückwalzen entbehrlich macht.

Grundsätzlich können derartige Pflückwalzen auch mit feststehenden Kanten von Pflückspalten in bekannter Ausführung mit den Vorteilen nach der Erfindung zusammenwirkend eingesetzt werden, welches dazu beiträgt, die Zuverlässigkeit und die Durchsatzleistung von Pflückaggregaten zu erhöhen.

Pflückwalzen nach der Erfindung können grundsätzlich für reihenabhängiges aber auch für reihenunabhängiges Pflücken in Verbindung mit Pflückvorsatzgeräten nach der Erfindung eingesetzt werden.

Da die Pflückwalzen nach der Erfindung in ihrem Durchmesser bedingt durch ihre großen Durchzugskräfte und ihre große Durchgangsleistung relativ klein gebaut werden können, lassen sich eine größere Anzahl von Pflückeinheiten mit geringen Abständen quer zur Fahrtrichtung zueinander anordnen, so dass die Erfindung eine ideale Plattform für das reihenlose Pflücken von Maispflanzen darstellt.

An Hand eines nachfolgend dargestellten Ausführungsbeispiels soll die Erfindung näher dargestellt und erläutert werden.

**Bezugszeichenliste**

| | |
|---|---|
| 1 | Erntegerät |
| 2 | Mähdrescher oder Feldhäcksler |
| 3 | Maschinenrahmen |
| 4 | inneren Abteiler |
| 5,5' | äußeren Abteiler |
| 6,6' | Abdeckungen |
| 7,7' | Querförderschnecke |
| 8 | Pflückereinheit |
| 9,9' | Pflückwalzen |
| 10 | Durchgangsspalt |
| 11 | Stützrahmen |
| 12 | Förderer |
| 13 | äußere Einzugsbereich |
| 14 | innere Einzugsbereich |
| 15,15' | Gewindegänge |
| 16,16' | Kegelstumpf oder Kegelspitzen |
| 17,17' | Lager |
| 18,18' | Lager |
| 19,19' | Antriebsschaft |
| 20,20' | Vielkeilprofil |
| 21 | Bereich |
| 22 | Bereich |
| 23 | Gewindezahn |
| 24 | Gewinderille |
| 25 | Nenndurchmesser |
| 26 | Kerndurchmesser |
| 27 | Steigung |
| 28 | Gewinderillenbreite |
| 29 | Gewindezahnbreite |
| 30,30' | Drehachse |
| 31 | Achsabstand |
| 32 | Gewindezahnhöhe |
| 33 | Gewinderillentiefe |
| 34 | Überdeckung |
| 35 | Durchgangsspaltquerschnitt |
| 36 | Durchgangsspaltbreite |
| 37 | Durchgangsspaltlänge |
| 38 | Flankenspiel |
| 39 | Flankenschnittkante |
| 40 | Gewindekernschnittkante |
| 41 | Gewindeaußendurchmesserschnittkante |
| 42 | Glattwalze |
| 43 | Spaltabstand |
| 52,52' | Rotationskörper |
| 53,53' | Drehachse |
| 54,54' | planearer Randbereich |
| 55 | feststehende Abstreifkante |
| 56 | Ausräumer |
| 57 | Querförderschnecke |
| 58 | Trennkörper |
| 59 | Mäh- und Einzugscheiben |
| 60,60' | Drehrichtung |
| 61,61' | Hüllkreis |
| 62 | Maschinengestell |

| 63,63' | Drehrichtung |
|---|---|
| 64 | Exzenterkreis |
| 65 | Exenterkreisdurchmesser |
| P | Figurenachse |
| F | Fahrtrichtung |
| T | Teilbereich |

**Mathematische Formelzeichen:**

| ω,ω' | Winkelgeschwindigkeit in 1/sek |
|---|---|
| φ,φ' | Drehwinkel (alternativ in Altgrad umgerechnet) |
| f | Drehfrequenz pro Sekunde |
| n,n' | Umdrehungen pro Minute |
| t | Zeit in Sekunden |
| π | Kreiszahl |

Es zeigen.

Fig.1 Ein Erntegerät als Pflückvorsatzgerät nach der Erfindung in einer Draufsicht

Fig.2 Ein Erntegerät als Pflückvorsatzgerät nach der Erfindung in einer Draufsicht mit freigelegten Pflückeinheiten ohne Abdeckungen

Fig.3 Eine einzelne Pflückeinheit nach der Erfindung gemäß Fig.2 in einer Draufsicht in vergrößerter Darstellung

Fig.4 Ausschnitt zwei nebeneinander liegender Pflückwalzen gemäß Fig.3 in vergrößerter Darstellung

Fig.5 Einzelheit X gemäß Fig.3 und Fig.4 in vergrößerter Darstellung mit positiver Überdeckung

Fig.6 Einzelheit X gemäß Fig.3 und Fig.4 in vergrößerter Darstellung mit einer Gewindeprofilverschiebung mit Nullüberdeckung

Fig.7 Einzelheit X gemäß Fig.3 und Fig.4 in vergrößerter Darstellung mit einer weiteren Gewindeprofilverschiebung mit negativer Überdeckung

Fig.8 Einzelheit X analog Fig.3 und Fig.4 in vergrößerter Darstellung mit einer anderen Kombination einer Pflückwalze nach der Erfindung mit eine Glattwalze als Pflückwalze

Fig.9 Darstellung exzentrisch gelagerter Pflückwalzen in der Drehwinkellage $\varphi = 0°$ bzw.360°

Fig.10 Darstellung exzentrisch gelagerter Pflückwalzen in der Drehwinkellage $\varphi = 90°$

Fig.11 Darstellung exzentrisch gelagerter Pflückwalzen in der Drehwinkellage $\varphi = 180°$

Fig.12 Darstellung exzentrisch gelagerter Pflückwalzen in der Drehwinkellage $\varphi = 270°$

Fig.13 vergrößerte Darstellung der Pflückwalzen in der Drehwinkellage $\varphi = 0°$ anlog Fig.9

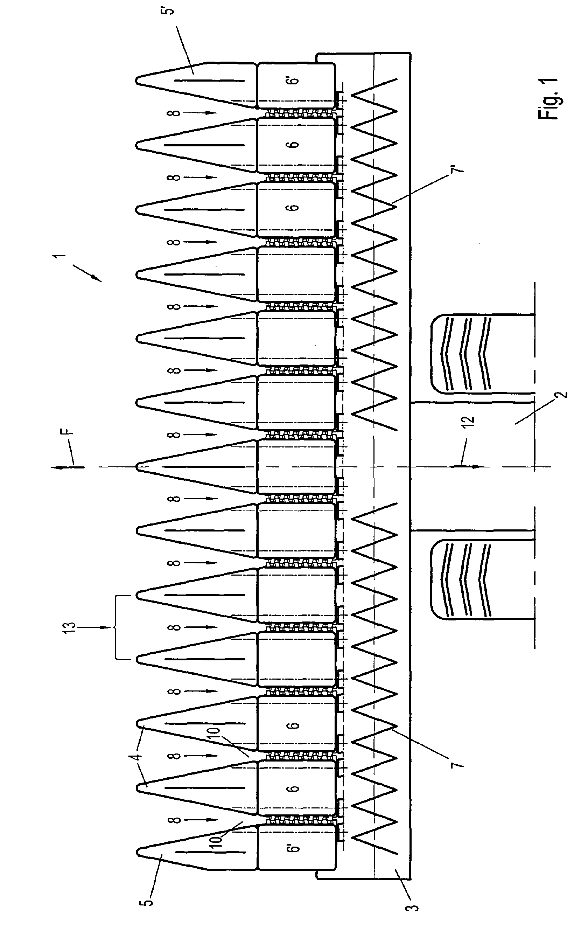

Fig. 1 veranschaulicht ein Erntegerät 1 in einer Draufsicht in vereinfachter Darstellung zum Ernten von Mais o. dgl. Körnerfrüchten. Dieses stellt ein Pflückvorsatzgerät für einen Mähdrescher 2 oder einen Feldhäcksler dar. Es kann aber prinzipiell auch als Anbaugerät Anwendung finden. Bei dem dargestellten Ausführungsbeispiel ist dem Erntegerät 1 ein Förderer 12 nachgeordnet, der das Erntegut, beispielsweise Maiskolben, dem Bearbeitungsteil des über Räder auf dem Boden abgestützten Mähdreschers 2 oder Feldhäckslers zuführen kann.

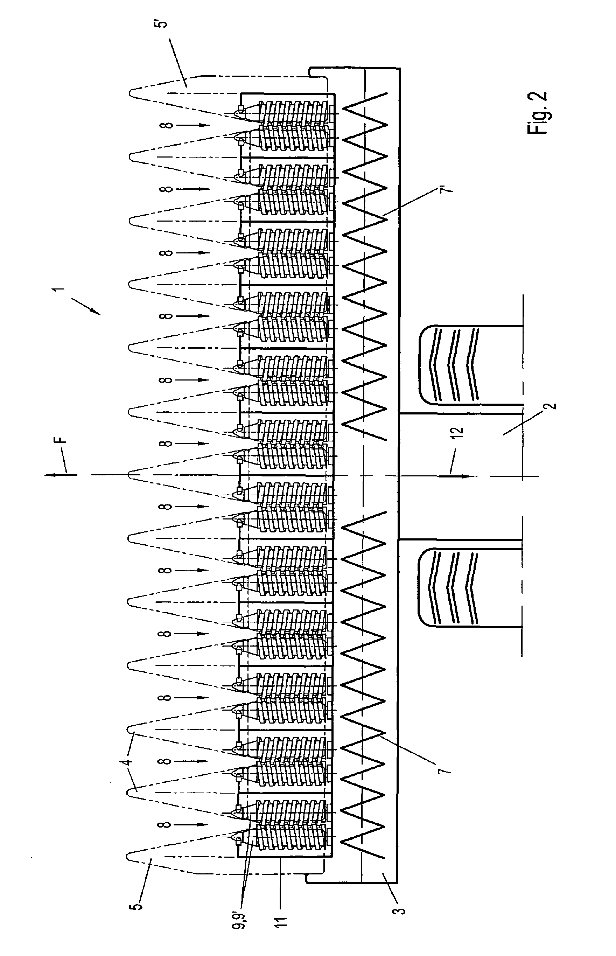

Fig.2 zeigt das in Fig.1 dargestellte Erntegerät 1 in der gleichen Draufsicht, jedoch mit freigelegten Pflückeinheiten, d.h. ohne die Abdeckungen 6,6'.

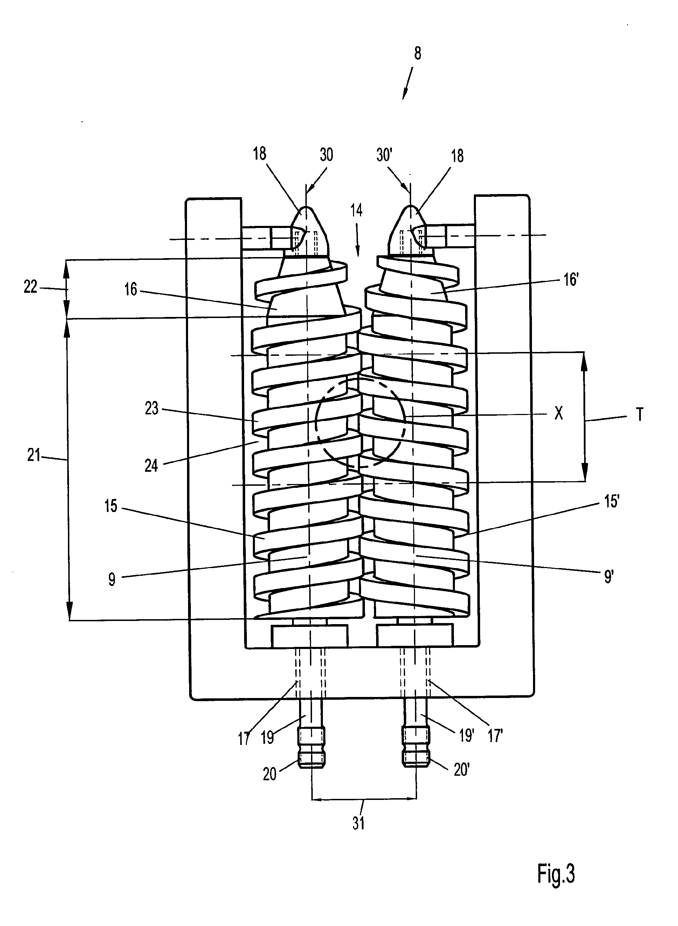

In Fig.3 ist eine einzelne Pflückereinheit 8 nach der Erfindung gemäß Fig.2 in einer Draufsicht dargestellt.

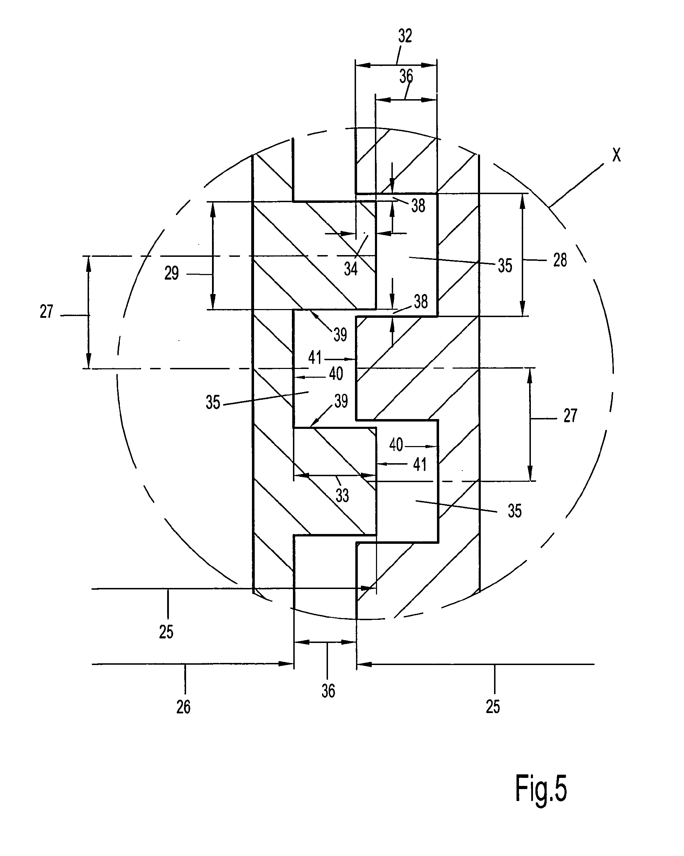

Fig.5 zeigt einen vergrößerten Ausschnitt aus Fig.3.

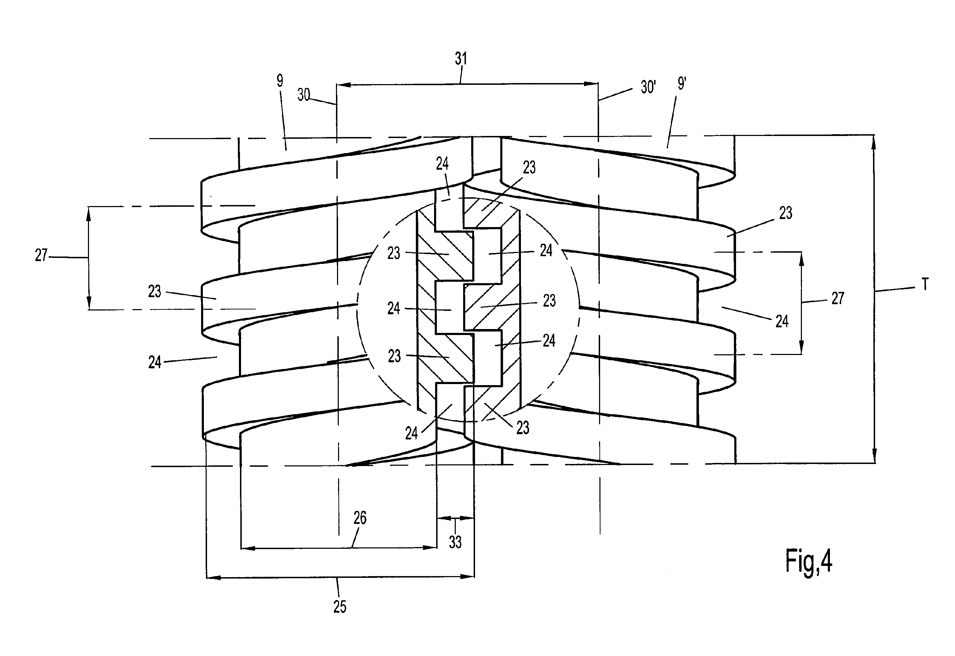

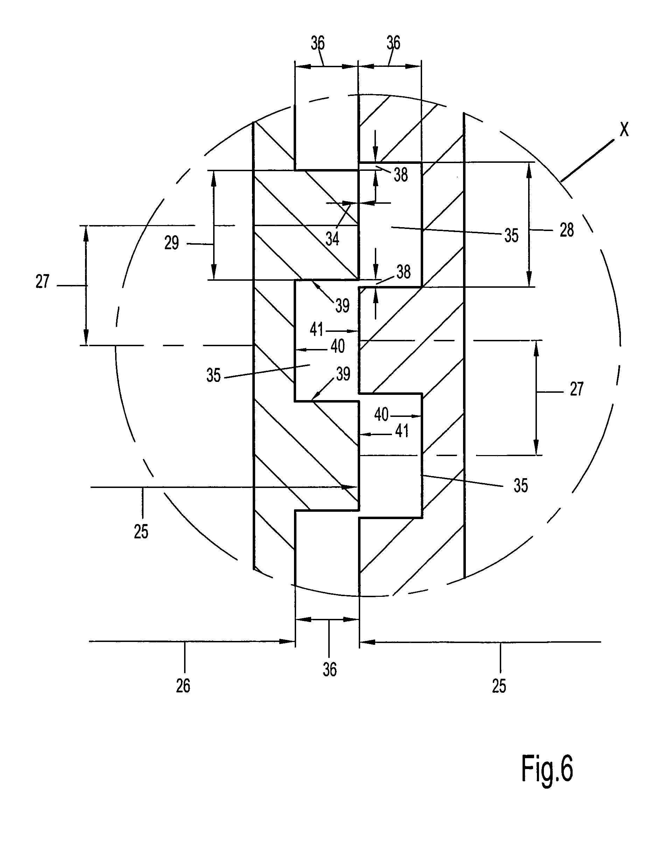

Fig.6 zeigt in einer weiteren Vergrößerung die Einzelheit X gemäß Fig.4 und Fig..5.

Das Erntegerät 1 umfasst im einzelnen einen Maschinenrahmen 3, als Teilerspitzen fungierende innere und äußere Abteiler 4,5,5', nebeneinander liegende Pflückereinheiten 8 mit deren Pflückwalzen 9,9', die unterhalb der sie teilweise überdeckenden inneren und äußeren Abdeckungen 6,6' angeordnet sind, und einer hinter den Pflückereinheiten 8 liegenden Querförderschnecke 7 bzw. 7'.

Dabei sind die Pflückwalzen 9,9' in einem Stützrahmen 11 in den Lagern 17,17' und 18,18' gelagert. Die rückwärtigen Enden der Pflückwalzen 9,9' sind als Antriebsschäfte 19,19' ausgebildet, die beispielsweise endseitig mit einem Vielkeilprofil ausgestattet sind, die in bekannter weise Kegelräder eines Kegelradgetriebes aufnehmen können. Die Pflückwalzen können somit in bekannter weise, (siehe Claas EP 1 005 264) und daher nicht näher dargestellt, beispielsweise von einem Winkelgetriebe, gegenläufig umlaufend, von einer Vorgelegewelle aus angetrieben werden.

Die Grundkörper der Pflückwalzen 9,9' sind in dem dargestellten Ausführungsbeispiel im Bereich 21 als Gewindespindeln mit Gewindegängen 15,15' mit einem zylindrischer Grundkörper ausgebildet. Die Pflückwalze 9 ist dabei mit rechtsgängigen 15, die Pflückwalze 9' mit linksgängigen 15' Gewindegängen als Flachgewinde ausgebildet. Alternativ können die Gewindegänge 15,15' beispielsweise auch als Trapez-, Sägezahn- Spitz- oder Rundgewinde oder Mischformen dergleichen ausgeführt sein.

Jeder Pflückereinheit 8 des Erntegerätes 1 ist ein äußerer Einzugsbereich 13 und ein innerer Einzugsbereich 14 zugeordnet, wobei die Stängel des Ernteguts, z.B. Maispflanzen, durch die Teilerspitzen bzw. die führende und abweisende Funktion der Abteiler 4,5,5' dem inneren Einzugsbereich 14 zugeführt werden.

Der zylindrische Bereich 21 der Pflückwalzen 9,9' geht im Bereich 22 der Pflückwalzen 9,9' in einen Kegelstumpf oder in eine Kegelspitze 16 über und ist vorzugsweise ebenfalls mit Gewindegängen überzogen.

Dabei ist der Achsabstand 31 der Pflückwalzen 9,9' so gewählt, dass, bedingt durch die Drehwinkellagen der Pflückwalzen 9,9' zueinander, die Gewindezähne 23 beider Pflückwalzen 9,9' mit den Gewinderillen 24 ebenfalls beider Pflückwalzen 9,9' alternierend und minimal in einander greifen. Dabei ist die Eingriffstiefe eines Gewindezahns 23 in die Gewinderille 24 definiert durch die Überdeckung 34.

Die eigentliche Gewindespindel als Gewindeschaft einer Pflückwalze 9,9' ist im Bereich 21 definiert durch die Kenngrößen Nenndurchmesser 25, Kerndurchmesser 26, Steigung 27, Gewinderillenbreite 28, Gewindezahnbreite 29, Gewindezahnhöhe 32, und Gewinderillentiefe 33. Über den Bereich 22 des Kegelstumpfs 16,16' setzen sich die Gewindegänge 15,15' jedoch mit sich kontinuierlich verjüngenden Kerndurchmessern auslaufend fort.

Letzteres begünstigt das Fang- und Einzugsverhalten der Pflückwalzen 9,9' und führt die Stängel der Pflanzen systematisch und fortlaufend in die Durchgangsspalte 10 zwischen den Pflückwalzen 9,9' hinein.

In Fig.4 ist der Teilbereich T der Pflückwalzen gemäß Fig. 3 vergrößert dargestellt, und die Einzelheit X zeigt dabei den Umriss der Gewindeprofile beider Gewindegänge 15,15' im Achsschnitt. Die Achsen der Gewindespindeln sind somit gleichzeitig die Drehachsen 30,30' der Pflückwalzen 9;9'.

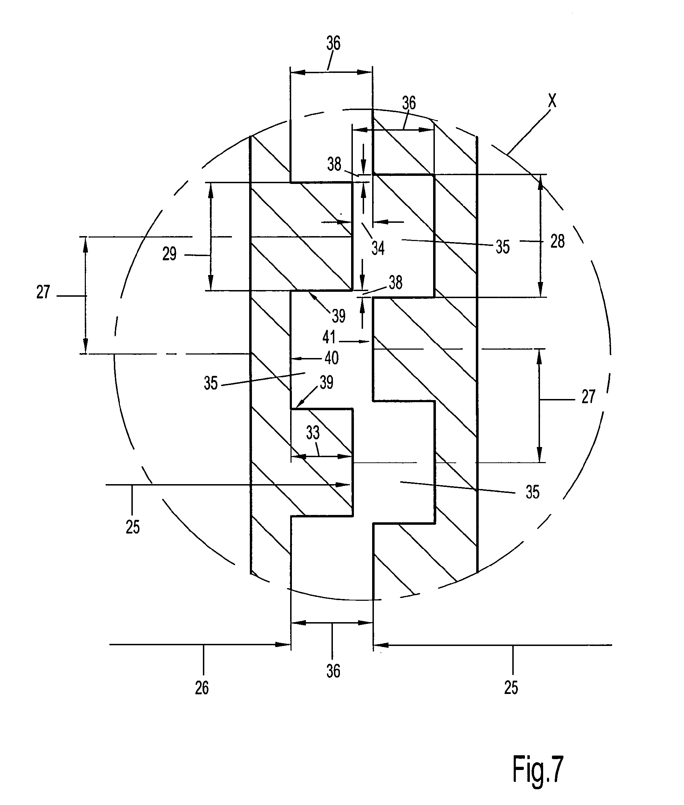

Die Überdeckung 34 kann sowohl positiv, als auch negativ sein und auch zu Null verschwinden. In Fig. 4 ist die Überdeckung positiv, d.h. die Summe der Radien der Nenndurchmesser 25 beider Pflückwalzen 9,9' ist größer als der Betrag des Achsabstands 31. Die Überdeckung 34 ist dann identisch zu Null verschwunden, wenn die Summe der Radien der Nenndurchmesser 25 beider Pflückwalzen 9,9' exakt dem Achsabstands 31 entspricht, wie dieses in der Fig. 6 dargestellt ist. Und schließlich ist die Überdeckung 34 dann negativ, wenn die Summe der Radien der Nenndurchmesser 25 beider Pflückwalzen 9,9' kleiner ist als der Betrag des Achsabstands 31, wie dieses in Fig. 7 dargestellt ist.

Alle drei Situation, wie in Fig.5, Fig. 6 und Fig..7 dargestellt, können durchaus brauchbare Lösungen nach der Erfindung in Verbindung mit den übrigen Parametern, die das Zusammenspiel der Gewindespindel als Pflückwalzen 9,9' bestimmen, darstellen.

Die Vorteile der Erfindung kommen dann zur Wirkung, wenn durch das Zusammenwirken von Gewindezähnen 23 und Gewinderillen 24 in sich quasi abgeschlossene Durchgangsspalte 10 sich etwa auf der Höhe des Achsschnitts befinden, und diese hintereinander folgend außermittig alternierend mal links und mal rechts zum halben Achsabstand 31 angeordnet sind.

Dabei ist der Durchgangsspalt 10 definiert durch die im Achsschnitt liegende Durchgangsspaltquerschnittsfläche 35, die durch die Durchgangsspaltbreite 36 und die Durchgangsspaltlänge 37 gekennzeichnet ist.

Diese begrenzenden Schnittkanten sind die Flanken 39 der Gewinderillen 24, die Schnittkante 40 des zylindrischen Teils des Gewindekerns, die Schnittkante 40, Kerndurchmessers 26 und die Schnittkante 41 des äußeren Zylinders der Gewindespindel bzw. der Pflückwalzen 9,9' schlechthin mit dem Nenndurchmesser 25. Dabei ist es nicht notwendigerweise von ausschlaggebender Bedeutung für die sichere Funktion, dass der Durchgangsspaltquerschnitt 35 lückenlos umschlossen ist. Derartige Lücken ergeben sich beispielsweise durch das Vorhandensein von axialem Flankenspiel 38 als Lücke oder auch durch die Negativüberdeckung 34 als Lücke.

Die Vorteile der Erfindung bestehen darin, dass der von einem Durchgangsspalt 10 eingefangene Pflanzenstängel allseitig von Begrenzungswänden umgeben ist, die bei richtiger Auslegung der Parameter zumindest eine zweidimensionale Verquetschung des Stängelquerschnitts hervorrufen und in Folge des kontinuierlichen Durchzugs der Stängel von oben nach unten, diese zumindest bis zum Erreichen der Achsschnittebene einen sich stetig verengenden Durchzugsspaltquerschnitt ausgesetzt sehen, welches gleichzeitig auch eine Verformung des Pflanzenstängels in seiner Längserstreckung zur Folge hat, so dass dieses insgesamt als dreidimensionale Verformung des Stängels im Sinne der Verquetschung beim Durchzug durch die Pflückeinheiten 8 angesehen werden kann. Dieses verursacht eine sichere allseitige Umklammerung des Stängels und dabei sind gleichzeitig große Durchzugskräfte erzeugbar.

Durch die fortlaufenden Umdrehungen der Pflückwalzen entsteht eine fortlaufende Axialverschiebung der einzelnen Durchgangsspalte 10, so dass die einmal eingefangenen Stängel nicht nur nach unten durchgezogen werden sondern auch gleichzeitig eine Axialverschiebung relativ entgegengesetzt der Fahrbewegung in Fahrtrichtung F.

Durch diese Art der Ausgestaltung der Pflückwalzen in Form von Gewindespindel entstehen somit im fortlaufenden Arbeitsprozess des Pflückvorgangs im inneren Einzugsbereich 14 sequentiell und kontinuierlich ständig neue leere Durchzugsspalte, die nunmehr die anstehenden Stängel aufnehmen können. Durch Variation der Drehzahl der Pflückwalzen kann die Axialverschiebungsgeschwindigkeit und damit der Durchsatz an Stängeln erhöht werden.

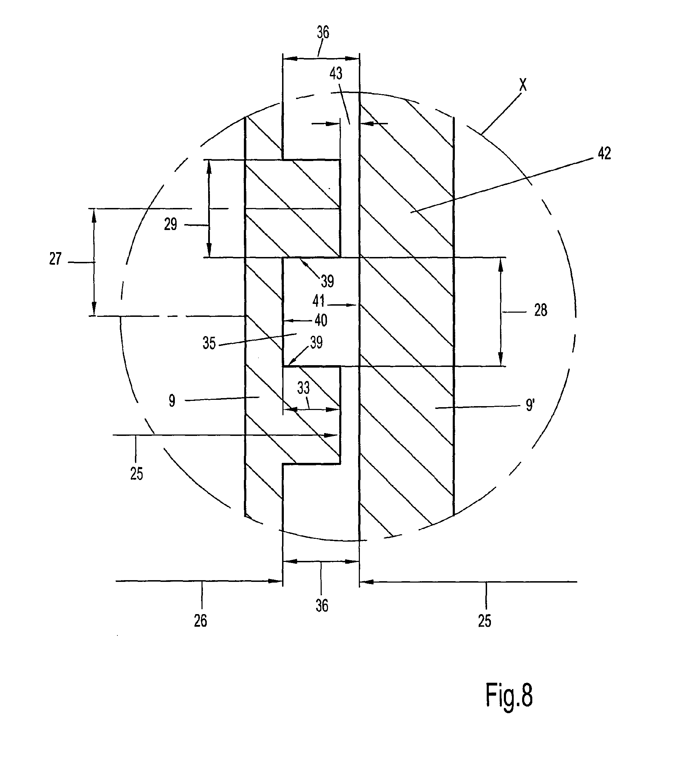

In Fig.8 ist eine weitere alternative Ausführungsform der Erfindung aufgezeigt. In der Fig. 8 ist analog Fig.3 und Fig.4 in einer vergrößerter Darstellung als Einzelheit X die Kombination einer Pflückwalze 9 nach der Erfindung mit eine Glattwalze 42 als Pflückereinheit 8 dargestellt. Dabei nimmt der Außendurchmesser 25 der Pflückwalze 9 gegenüber dem Außendurchmesser 25 der Glattwalze 42 ein einen minimalen Abstand als Spaltabstand 43 ein.

Auch in dieser Kombination lassen sich untereinander abgegrenzte Durchgangsspalte 10 mit einem Durchgangsquerschnitt 35 mit dreidimensionaler Einspannung und Verquetschung nach der Erfindung erzielen.

Als günstig hat sich in Verbindung mit Flach- oder Trapezgewinde oder ähnlicher Ausführung eine Gewinderillenbreite 28 bzw. Durchgangsspaltbreite 35 etwa im Bereich von 20mm bis 40mm, vorzugsweise etwa 30mm bei einer Steigung 27 im Bereich von etwa 50mm bis 60mm erwiesen. Die Gewinderillentiefe 33 ist dabei abhängig von der erforderlichen Einschnürung der Pflanzenstängel zu dessen Verquetschung zwecks Aufbringung der Durchzugskräfte.

Als günstig hat sich in Verbindung mit dem zuvor erwähnten Flach- oder Trapezgewinde eine Gewinderillentiefe 33 etwa im Bereich von 10 mm bis 30 mm, vorzugsweise etwa 20 mm erwiesen.

Die Erfindung begründet gleichermaßen auch verfahrenstechnisch erhebliche Vorteile, indem, dass durch die fortlaufenden Umdrehungen der als Gewindespindeln ausgebildeten Pflückwalzen 9,9' einer Pflückeinheit (8) eine kontinuierliche und fortlaufende Axialverschiebung der einzelnen hintereinander liegenden Durchgangsspalte 10 stattfindet, welches eine schelle Abförderung der bereits abgeernteten Stängel unterstützt.

Dabei werden die von den einzelnen Durchgangsspalten 35 eingefangenen Pflanzenstängel im Wirkungsbereich der Durchgangsspalte 10, wie zuvor beschrieben, dreidimensional eingespannt und verquetscht, und infolge der Umlaufbewegung der Pflückwalzen 9,9' von diesen bei gleichzeitiger kontinuierlicher Axialverschiebung durchgezogen, wodurch die Trennung der Fruchtstände von den Pflanzenstängeln ausgelöst wird.

Dabei können die Durchgangsspalte 10 der Pflückwalzen 9,9' einer Pflückereinheit 8 im laufenden Arbeitsprozess gleichermaßen als Pflückspalte ohne zur Hilfenahme und Unterstützung von Pflückplatten genutzt werden.

Somit können diese gleichermaßen verfahrenstechnisch als Förderelemente zum Abtransport der abgetrennten Fruchtstände in Richtung des nachgeordneten Förderers 12 des Mähdreschers oder Feldhäckslers 2 in vorteilhafter Weise nach der Erfindung genutzt werden..

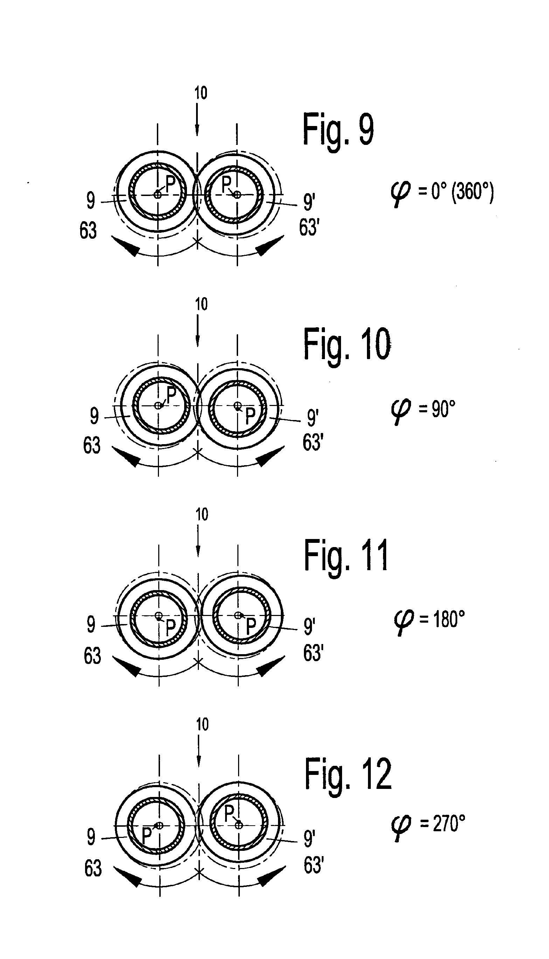

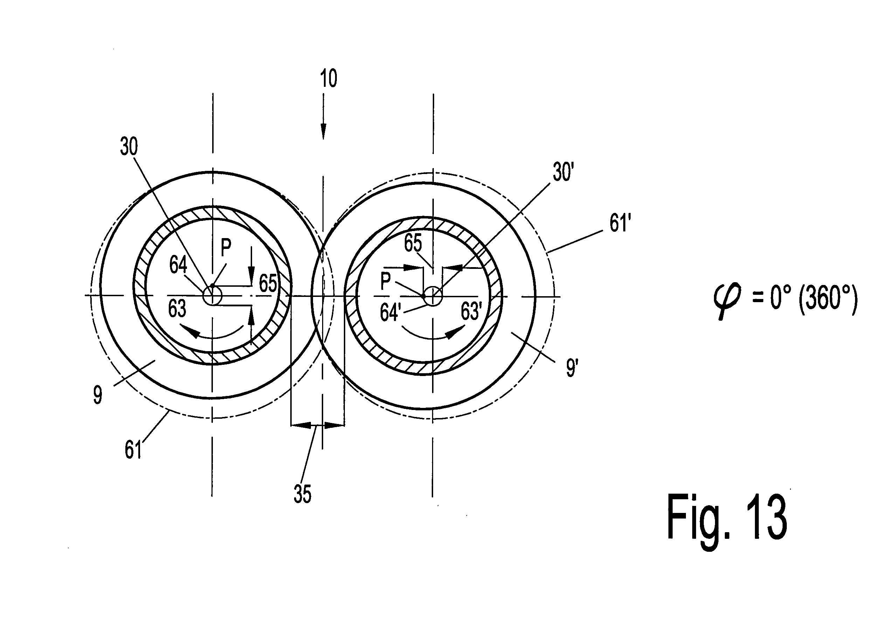

Die Figuren Fig.9, Fig.10 , Fig.11, Fig.12 und Fig.13 zeigen exzentrisch gelagerter Pflückwalzen in verschiedenen Drehwinkellage φ = 0° bzw.360°, wobei die Fig.13 lediglich eine Vergrößerung von Fig.9 darstellt.

Die Pflückwalzen 9,9' können so ausgebildet sein, dass deren Figurenachse exzentrisch zu deren Drehachse 30,30' liegt. Dadurch bedingt rotiert die Figurenachse P auf dem Exzenterkreis 64,64', so dass auch die Hüllkreise 61,61' an dieser exzentrischen Umlaufbahn gekoppelt sind. In bezug auf die etwa horizontale Ausrichtung des Durchzugsspalts 10 verursacht diese Exzentrizität einen mit der Drehfrequenz der Umlaufbewegung der Pflückwalzen 9,9' oszillierenden Durchgangsspalt 10, welches zur Folge hat, dass die im Durchzug befindlichen Pflanzenstängel horizontalen Beschleunigungskräften mit periodisch wechselnder Richtung ausgesetzt sind. Dieses wiederum verursacht horizontale Schüttelbewegungen mit der Umlauffrequenz n,n' der Pflückwalzen an den Pflanzenstängeln, welches zu einem kraftmindernden und schnellerem Ablösen der Fruchtstände von den Stängeln beitragen kann.

Damit der Durchzugsspalt 10 während der Umlaufbewegungen der Pflückwalzen 9,9' einer Pflückeinheit 8 seine Breite (d.h. Durchgangsspaltquerschnitt 35) etwa konstant hält, ist eine Phasenverschiebung Δφ in Bezug auf die Drehwinkel φ,φ' der Pflückwalzen 9,9'von etwa 60° bis 120° vorzugsweise etwa 90° vorgesehen. Dabei soll der Drehwinkel φ der Pflückwalze 9 und der Drehwinkel φ' der Pflückwalze 9' zugeordnet sein, so dass sich die Phasenverschiebung Δφ als Kenngröße wie folgt definieren lässt:

$$\Lambda\varphi = \sqrt{\varphi^2 - \varphi'^2} \quad (\Delta\varphi = \text{Betrag des Phasenverschiebungswinkels})$$

Die Figuren Fig.9 bis Fig.12 zeigen unterschiedliche Drehwinkellagen im fortschreitenden Umlaufprozess mit dem Drehwinkel φ als Bezugsgröße. Dabei ist unterstellt, dass die Winkelgeschwindigkeit ω,ω' (ω=ω; ω=Π*n/30; ω'=Π*n'/30) beider Pflückwalzen 9,9' einer Pflückeinheit 8 dem Betrage nach untereinander gleich, die Drehrichtungen 63,63' jedoch gegenläufig zueinander sind.

An Hand der dargestellten Figuren Fig.9 bis Fig. 12 ist ein 360° Drehzyklus dargestellt, wobei die 360°Lage wiederum identisch mit der Ausgangslage mit dem Drehwinkel φ=0° in Fig. 9 ist. Die Figuren Fig.10 und Fig.11 und Fig.12 zeigen weitere fortgeschrittene Drehwinkellagen und zwar mit dem Drehwinkel φ=90°bzw. π/4, φ=180°bzw. π und φ=270° bzw.3/2P , wobei der Drehwinkel φ=360°bzw. 2π die gleiche Lage, wie die Ausgangslage φ=0°bzw = 0*π erzeugt.

Fig.13 zeigt die Ausgangslage φ=0° (Nulldurchgang) in einer noch weiter vergrößerten Darstellung.

Somit lässt sich jede beliebige Drehwinkellage mathematisch wie folgt definieren, wobei gilt:

$$\varphi = \omega * t$$

$$\varphi' = -\omega * t + \Delta\varphi$$

bzw.

Das Minuszeichen bedeutet, das die Drehrichtung von -ω entgegen gesetzt zu ω verläuft, wobei Δφ ebenso positive wie negative Werte annehmen kann.

Dabei gilt

$$\omega = 2 \pi * f$$

bzw.

$$\omega = \pi * n/30.$$

mit

$$\pi = \text{Kreiszahl}$$

$$f = \text{Drehfrequenz in 1/Sekund}$$

$$n, n' = \text{Umdrehungen pro Minute der Pflückwalzen 9,9'}$$

Diese Betrachtungsweise unterstellt, dass bei Drehzahlen n bzw. n' beider Pflückwalze 9 bzw. 9 dem Betrage nach gleich und gegenläufig zueinander sind.

Die Figurenachse einer Pflückwalze bewegt sich während einer vollen Umdrehung auf ihren Exzenterkreis 64 mit dem Exzenterkreisdurchmesser 65, so dass die Amplitude der horizontalen Oszillation des Durchgangsspaltes 5 dem Durchmesser 65 des Exzenterkreises 64 entspricht.

Die äußeren Konturen der Pflückwalzen 9,9' beschreiben somit während ihrer Drehung einen Hüllkreis 61,61', dessen jeweiliger Mittelpunkt die Drehachse 30,30' ist. Somit beschreibt der Konturkreis 23 aber auch jeder andere Massenpunkt der Pflückwalzen 9,9' eine unlaufende Oszillation im Sinne einer Kreisschwingung, dessen Amplitude dem Exzenterkreisdurchmesser entspricht.

Um die Breite des Durchgangsspaltes 5 etwa konstant zu halten, laufen die Figurenachsen P auf den Exzenterkreisen 64,64'mit einer konstanten Phasenverschiebung Δφ zueinander, wobei ein Δφ im Bereich 60° bis etwa 120°, vorzugsweise etwa 90°als besonders günstig angesehen wird.

Die Exzentrizität der Pflückwalzen erzeugt somit eine oszillierende Bewegung sowohl in horizontaler als auch in vertikaler Richtung, welches auch die Abförderung der Maiskolben in Richtung der Querfördereinrichtung günstig beeinflussen kann.

## EP 1 502 492 A2

**Patentansprüche**

1. Gerät zum Ernten von Mais oder dergleichen Körnerfrüchten, insbesondere Pflückvorsatzgerät für Mähdrescher (2) oder Feldhäcksler (2), mit wenigstens zwei Pflückwalzen zur Trennung des Fruchtstandes von dem diesen tragenden Pflanzenteil, die um etwa in Fahrtrichtung (F) des Pflückvorsatzgerätes weisende Drehachsen (30,30') angetrieben umlaufen, und die miteinander oder mit dem Walzengrundkörper der jeweils benachbarten Pflückwalze einen Durchgangsspalt (10) einer Pflückereinheit begründen, **dadurch gekennzeichnet, dass** wenigstens eine der Pflückwalzen (9 oder 9') einer Pflückereinheit (8) um ihre Drehachse (30 oder 30') Gewindegänge (15 oder 15') im Sinne einer Gewindespindel aufweist.

2. Gerät nach Anspruch 1, **dadurch gekennzeichnet, dass** beide Pflückwalzen (9,9') um Ihre Drehachsen (30,30') Gewindegänge (15, 15') im Sinne einer Gewindespindel aufweisen und das beide Pflückwalzen (9,9') zusammenwirkend eine Pflückereinheit (8) definieren

3. Gerät nach Anspruch 1, **dadurch gekennzeichnet, dass** beide Pflückwalzen (9,9') um deren Drehachsen (30,30') gegenläufig zueinander drehen.

4. Gerät nach Anspruch 1 oder 2, **dadurch gekennzeichnet, dass** die Steigung (27) der Gewindegänge beider Pflückwalzen (9,9') über den Bereich (21) der Schaftlänge dem Betrage nach untereinander gleich, in ihrer Steigungsrichtung als Rechts- bzw. Linksgewinde aber entgegengesetzt zueinander ausgebildet sind.

5. Gerät nach Anspruch 1 oder 2, **dadurch gekennzeichnet, dass** ein Durchgangsspalt (10) einer Pflückereinheit (8) im Wesentlichen von einer Gewinderille (24) gebildet wird.

6. Gerät nach Anspruch 1 oder 2 , **dadurch gekennzeichnet, dass** die vorderen Enden der Pflückwalzen (9,9') als Kegelstumpf oder Kegelspitzen (16,16') ausgebildet sind.

7. Gerät nach Anspruch 6, **dadurch gekennzeichnet, dass** die Gewindegänge (15,15') sich verjüngend der Kontur der kegeligen Oberfläche des Grundkörpers von Kegelstumpf oder Kegelspitze (16,16') anpassen und sich dort längs der Drehachsen (30,30') fortsetzen.

8. Gerät nach Anspruch 1 oder 2, **dadurch gekennzeichnet, dass** die Drehwinkelzuordnung der Pflückwalzen (9,9') untereinander so festgelegt ist, dass per Achsschnittdefinition die Gewindeprofile beider Pflückwalzen (9,9') einander so zugewandt sind, dass einer Gewinderille (24) der einen Pflückwalze (9 oder 9') ein Gewindezahn (23) der anderen Pflückwalze (9 oder 9') gegenüberliegt.

9. Gerät nach Anspruch 1 oder 2, **dadurch gekennzeichnet, dass** eine als Gewindespindel ausgebildete Pflückwalze ein- oder mehrgängiges Gewinde aufweisen kann.

10. Gerät nach Anspruch 1 oder 2, **dadurch gekennzeichnet, dass** eine Pflückwalze (9 oder 9') in der Gewinderille (24) eines Gewindegangs (15 oder 15') wenigstens ein Element als Vorsprung mit einer mitnehmenden Arbeitskante aufweist.

11. Gerät nach Anspruch 1 oder 2, **dadurch gekennzeichnet, dass** ein Durchgangsspalt (10) gleichermaßen die Funktion eines Pflückspalts definiert..

12. Gerät nach Anspruch 1 oder 2, **dadurch gekennzeichnet, dass** die Gewinderillenbreite (28) der Gewindegänge (15 oder 15') etwa in den Bereich von 20mm bis 40mm vorzugsweise bei etwa 30mm liegt.

13. Gerät nach Anspruch 1 oder 2, **dadurch gekennzeichnet, dass** die Gewinderillentiefe (33) der Gewindegänge (15 oder 15') etwa in den Bereich von 10mm bis 30mm vorzugsweise bei etwa 20mm liegt.

14. Gerät nach Anspruch 1 oder 2 in Verbindung mit einem oder mehreren der vorhergehenden Ansprüche, **dadurch gekennzeichnet, dass** die Gewindegänge (15,15') vorzugsweise als eingängige Flach- oder Trapezgewinde oder diesen ähnlich ausgeführt sind.

15. Gerät zum Ernten von Mais oder dergleichen Körnerfrüchten, insbesondere Pflückvorsatzgerät für Mähdrescher (2) oder Feldhäcksler (2), mit wenigstens zwei Pflückwalzen zur Trennung des Fruchtstandes von dem diesen tragenden Pflanzenteil, die um etwa in Fahrtrichtung (F) des Pflückvorsatzgerätes weisende Drehachsen (30,30') angetrieben umlaufen, und die miteinander oder mit dem Walzengrundkörper der jeweils benachbarten Pflückwalze einen Durchgangsspalt (10) einer Pflückereinheit begründen, **dadurch gekennzeichnet, dass** der Durchgangsspalt (10) eine periodisch wiederkehrende Lageveränderung mit der Drehfrequenz (f) erfährt.

16. Gerät zum Ernten von Mais nach Anspruch 15, **dadurch gekennzeichnet, dass** die periodisch oszillierende Lageveränderung des Durchgangsspalts (10) durch den exzentrischen Umlauf der Figurenachse (P) auf einem Exzenterkreis (64) wenigstens einer Pflückwalze (9 oder 9') einer Pflückeinheit (8) verursacht wird.

17. Gerät zum Ernten von Mais nach Anspruch 15, **dadurch gekennzeichnet, dass** die periodisch oszillierende Lageveränderung des Durchgangsspalts (10) durch den exzentrischen Umlauf der Figurenachsen (P) auf einem Exzenterkreis (64) beider Pflückwalzen (9,9') einer Pflückeinheit (8) verursacht wird.

18. Gerät zum Ernten von Mais nach Anspruch 15, **dadurch gekennzeichnet, dass** der Phasenverschiebungswinkel Δφ zweier Pflückwalzen einer Pflückeinheit so bemessen ist, dass die Spaltweite des Durchgangsspalts (10) etwa konstant bleibt.

19. Gerät zum Ernten von Mais nach Anspruch 15, **dadurch gekennzeichnet, dass** die Phasenverschiebungswinkel Δφ zweier Pflückwalzen einer Pflückeinheit (8) etwa zwischen 60° und 120°, vorzugsweise bei etwa 90° liegt.

20. Gerät zum Ernten von Mais nach Anspruch 15, **dadurch gekennzeichnet, dass** der Betrag der horizontalen Amplitude des Durchgangsspalts (10) etwa dem Betrag des Exzenterkreisdurchmessers (65) beträgt.

21. Verfahren zum Ernten von Mais oder dergleichen Körnerfrüchten, insbesondere Pflückvorsatzgerät für Mähdrescher (2) oder Feldhäcksler (2), mit wenigstens zwei Pflückwalzen zur Trennung des Fruchtstandes von dem diesen tragenden Pflanzenteil, die um etwa in Fahrtrichtung (F) des Pflückvorsatzgerätes weisende Drehachsen (30,30') angetrieben umlaufen, und die miteinander oder mit dem Walzengrundkörper der jeweils benachbarten Pflückwalze einen Durchgangsspalt (10) einer Pflückereinheit begründen, **dadurch gekennzeichnet, dass** durch die fortlaufenden Umdrehungen der als Gewindespindeln ausgebildeten Pflückwalzen (9,9') einer Pflückeinheit (8) eine kontinuierliche und fortlaufende Axialverschiebung der einzelnen hintereinander liegenden Durchgangsspalte (10) stattfindet.

22. Verfahren nach Anspruch 21, **dadurch gekennzeichnet, dass** die Durchgangsspalte (35) der Pflückwalzen (9,9') einer Pflückereinheit (8) im laufenden Arbeitsprozess gleichermaßen als Pflückspalte genutzt werden.

23. Verfahren nach Anspruch 21, **dadurch gekennzeichnet, dass** die Pflückwalzen (9,9') einer Pflückereinheit (8) im laufenden Arbeitsprozess gleichermaßen als Förderelemente zum Abtransport der abgetrennten Fruchtstände in Richtung Querförderschnecke (7, 7') des nachgeordneten Förderers (12) eines Mähdreschers oder Feldhäckslers (2) dienen.

Fig. 1

Fig. 2

EP 1 502 492 A2

Fig.3

Fig,4

EP 1 502 492 A2

Fig.5

Fig.6

Fig.7

Fig.8

Fig. 9

$\varphi = 0° (360°)$

Fig. 10

$\varphi = 90°$

Fig. 11

$\varphi = 180°$

Fig. 12

$\varphi = 270°$

EP 1 502 492 A2

$\varphi = 0°\ (360°)$

Fig. 13